# EUROPEAN PATENT APPLICATION

(11) **EP 4 773 263 A1**
(43) Date of publication of application: **08.07.2026**
(21) Application number: 24880027.8
(22) Date of filing: 07.10.2024
(51) Int. Cl.: H01M 8/04119, B01D 63/06

(54) **UNIT MODULE OF FUEL CELL HUMIDIFIER AND FUEL CELL HUMIDIFIER INCLUDING SAME**

(30) Priority: 16.10.2023 KR 20230137988
(71) Applicant: Kolon Industries, Inc., Seoul 07793 (KR)
(72) Inventor: KIM, In Ho, Seoul 07793 (KR); KIM, Do Woo, Seoul 07793 (KR)
(74) Representative: Vossius & Partner Patentanwälte Rechtsanwälte mbB
(86) International application number: PCT/KR2024/015224
(87) International publication number: WO 2025/084689

(57) **Abstract**

A unit module of a fuel cell humidifier, according to the present disclosure, includes: a module housing formed in a hexahedral shape and having first openings in an upper surface, lower surface, front surface, and rear surface; and a cartridge mounted on the module housing and having a humidification membrane therein, wherein the cartridge is formed in a columnar shape and is fixed to one side surface and the other side surface of the module housing, and one or more of the cartridge are mounted in the module housing. A fuel cell humidifier including a unit module, according to the present disclosure, includes a unit module, a connection gasket, and a housing gasket, and the unit module is provided in plurality and the plurality of unit modules are connected to each other.

## Description

### Technical Field

The present disclosure relates to a unit module of a fuel cell humidifier and a fuel cell humidifier including the same, and more particularly, to a unit module of a fuel cell humidifier and a fuel cell humidifier including the same, wherein a unit module including a plurality of cartridges is manufactured, and a fuel cell humidifier is manufactured using the unit module, such that the fuel cell humidifier may be manufactured in various forms.

### Background Art

A fuel cell is a power-generating battery that produces electricity by combining hydrogen and oxygen. Unlike typical chemical cells such as batteries or accumulators, fuel cells may continuously produce electricity as long as hydrogen and oxygen are supplied, and since there is no heat loss, they have the advantage of efficiency about twice that of internal combustion engines.

A fuel cell system includes a stack, which is an electricity-generating assembly of unit fuel cells each composed of a cathode and an anode, an air supply device for supplying air to the cathode of the fuel cells, and a hydrogen supply device for supplying hydrogen to the anode of the fuel cells.

In order for an ion-exchange membrane of a membrane-electrode assembly (MEA) of a polymer fuel cell of the fuel cell system to function smoothly, an appropriate amount of moisture is required, and for this purpose, a humidifier is provided in the air supply device of the fuel cell system to humidify the air supplied to the fuel cells.

The humidifier uses the moisture in the high-temperature, humid exhaust gas discharged from the cathode of the fuel cell, to humidify the dry gas supplied through an air compressor of the air supply device, and supplies the humidified air to the cathode of the fuel cells.

A fuel cell humidifier uses a membrane humidification method. A membrane humidifier performs membrane humidification through a method of gas-to-gas moisture exchange between the high-temperature, humid exhaust gas discharged from the cathode of the fuel cells, and the dry gas supplied through the air compressor.

The fuel cell humidifier may be provided with a cartridge in which a humidification membrane formed of a hollow fiber membrane is arranged. Dry gas passes through the hollow fiber membrane through one side and the other side of the cartridge, and an opening (window) that is open to the outside is provided on a side surface of the cartridge.

Exhaust gas flows into the cartridge through the opening of the cartridge, and the exhaust gas flowing into the cartridge exchanges moisture with the dry gas passing through the hollow fiber membrane.

However, in the related art, fuel cell humidifiers using a cartridge have the following problems. A housing of a fuel cell humidifier may be provided with a plurality of cartridges, and the number of cartridges provided in the housing may change depending on the amount of humidified air supplied to the fuel cells.

For fuel cell humidifiers using a cartridges, there is a problem in that a separate housing has to be manufactured according to the number of cartridges installed inside the housing. In addition, fuel cell humidifiers in the art have the problem of excessive manufacturing costs as they must be manufactured in various ways depending on the amount of humidified air supplied to the fuel cell.

In addition, in the art, fuel cell humidifiers using cartridges have the problem that it is difficult to replace a cartridge when the humidification membrane inside the cartridge is damaged. The humidification membrane inside the cartridge may be damaged by use of a fuel cell humidifier, in which case the cartridge has to be replaced.

However, in the art, fuel cell humidifiers using cartridges have a problem in that it is difficult to replace cartridges with damaged humidification membranes because the cartridges and housing are formed as one piece.

### Disclosure of Invention

### Technical Problem

The present disclosure is intended to solve the above-described problem, and more specifically, relates to a unit module of a fuel cell humidifier and a fuel cell humidifier including the same, and more particularly, to a unit module of a fuel cell humidifier and the fuel cell humidifier including the same, wherein a unit module including a plurality of cartridges is manufactured and a fuel cell humidifier is manufactured using the unit module, such that the fuel cell humidifier may be manufactured in various forms.

### Solution to Problem

In order to solve the above-described problem, a unit module of a fuel cell humidifier, according to the present disclosure, includes: a module housing formed in a hexahedral shape and having first openings in an upper surface, lower surface, front surface, and rear surface; and a cartridge mounted on the module housing and having a humidification membrane therein, wherein the cartridge is formed in a columnar shape and is fixed to one side surface and the other side surface of the module housing, and one or more of the cartridge are mounted in the module housing.

In order to solve the above-described problem, the unit module of a fuel cell humidifier, according to the present disclosure, may further include a connection gasket that is assemblably coupled to any one or more of the upper surface, the lower surface, the front surface, and the rear surface of the module housing, and includes a second opening open to the outside.

In order to solve the above-described problem, when the connection gasket of the unit module of a fuel cell humidifier, according to the present disclosure, is coupled to any one or more of the upper surface, the lower surface, the front surface, and the rear surface of the module housing, the first openings and the second opening may communicate with each other.

In order to solve the above-described problem, the module housing of the unit module of a fuel cell humidifier, according to the present disclosure, may be provided with a first support portion disposed in a middle portion of the module housing, and has a through hole in which the cartridge is mounted, and the first openings provided in the upper surface, the lower surface, the front surface, and the rear surface of the module housing may be divided based on the first support portion.

In order to solve the above-described problem, the unit module of a fuel cell humidifier, according to the present disclosure, may further include a connection gasket that is assemblably coupled to any one or more of the upper surface, the lower surface, the front surface, and the rear surface of the module housing, and that includes a second opening open to the outside and a second support portion closed off from the outside, wherein the second opening of the connection gasket is divided based on the second support portion, and when the connection gasket is coupled to any one or more of the upper surface, the lower surface, the front surface, and the rear surface of the module housing, the first openings and the second opening communicate with each other.

In order to solve the above-described problem, the unit module of a fuel cell humidifier, according to the present disclosure, may further include a housing gasket that is assemblably coupled to any one or more of the upper surface, the lower surface, the front surface, and the rear surface of the module housing and is closed off from the outside, and when the housing gasket is coupled to any one or more of the upper surface, the lower surface, the front surface, and the rear surface of the module housing, the upper surface, the lower surface, the front surface, and the rear surface of the module housing may be blocked.

In order to solve the above-described problem, the housing gasket of the unit module of a fuel cell humidifier, according to the present disclosure, may have a cut portion formed in a groove shape recessed into the inside of the housing gasket.

In order to solve the above-described problem, the unit module of a fuel cell humidifier, according to the present disclosure, may further include a first port gasket that is assemblably coupled to any one or more of the upper surface, the lower surface, the front surface, and the rear surface of the module housing, and includes a first port formed by a hole open to the outside.

In order to solve the above-described problem, the unit module of a fuel cell humidifier, according to the present disclosure, may further include a second port gasket that is assemblably coupled to any one or more of the upper surface, the lower surface, the front surface, and the rear surface of the module housing, and includes two or more second ports formed by holes opens to the outside.

In order to solve the above-described problem, in the unit module of a fuel cell humidifier, according to the present disclosure, when the cartridge having a columnar shape is fixed to one side surface and the other side surface of the module housing, a sealing member may be provided between the cartridge and the module housing.

In order to solve the above-described problem, a fuel cell humidifier including a unit module, according to the present disclosure, includes: a unit module including a module housing formed in a hexahedral shape and having first openings in an upper surface, lower surface, front surface, and rear surface, and a cartridge mounted on the module housing and having a humidification membrane therein; a connection gasket that is assemblably coupled to any one or more of the upper surface, the lower surface, the front surface, and the rear surface of the module housing and includes a second opening that is open to the outside; and a housing gasket that is assemblably coupled to any one or more of the upper surface, the lower surface, the front surface, and the rear surface of the module housing and is closed off from the outside, wherein the unit module is provided in plurality and the plurality of unit modules are connected to each other.

In order to solve the above-described problem, the fuel cell humidifier including a unit module, according to the present disclosure, may further include a first port gasket that is assemblably coupled to any one or more of the upper surface, the lower surface, the front surface, and the rear surface of the module housing, and includes a first port formed by a hole that is open to the outside.

In order to solve the above-described problem, the connection gasket of the fuel cell humidifier including a unit module, according to the present disclosure, may be provided between one unit module and another unit module and connects the one unit module to the other unit module.

In order to solve the above-described problem, in the fuel cell humidifier including a unit module, according to the present disclosure, either the housing gasket or the first port gasket may be coupled to a portion arranged at an outermost end among the upper surface, the lower surface, the front surface, and the rear surface of the module housing provided in the unit module.

### Advantageous Effects of Invention

The present disclosure relates to a unit module of a fuel cell humidifier and a fuel cell humidifier including the same, wherein a unit module including a plurality of cartridges is manufactured and a fuel cell humidifier is manufactured using the unit module, such that the fuel cell humidifier may be manufactured in various forms.

In addition, according to the present disclosure, by assemblably coupling, to a unit module, a connection gasket, a housing gasket, and a first port gasket and a second port gasket each including a port, the degree of freedom in manufacturing a fuel cell humidifier may be improved and the position of the ports may be selected freely.

In addition, according to the present disclosure, the unit module of a fuel cell humidifier may be replaced during use, and all or some of the cartridges may be used by replacing the unit module of a fuel cell humidifier during use.

### Brief Description of Drawings

FIG. 1 is a diagram illustrating a unit module of a fuel cell humidifier according to an embodiment of the present disclosure.
FIG. 2 is a diagram illustrating a connection gasket according to an embodiment of the present disclosure.
FIG. 3 is a diagram illustrating a housing gasket according to an embodiment of the present disclosure.
FIG. 4 is a diagram illustrating a first port gasket according to an embodiment of the present disclosure.
FIG. 5 is a diagram illustrating a second port gasket according to an embodiment of the present disclosure.
FIG. 6 is a diagram illustrating a fuel cell humidifier manufactured using one unit module and a second port gasket, according to an embodiment of the present disclosure.
FIG. 7 is a diagram illustrating a fuel cell humidifier manufactured using one unit module and two first port gaskets, according to an embodiment of the present disclosure.
FIG. 8A, FIG. 8B, and FIG. 8C are diagrams illustrating a fuel cell humidifier manufactured using two unit modules, according to an embodiment of the present disclosure.
FIG. 9A, FIG. 9B, and FIG. 9C are diagrams illustrating a fuel cell humidifier manufactured using four unit modules, according to an embodiment of the present disclosure.

### Mode for Invention

The principle of the present disclosure and embodiments thereof will be explained and disclosed to clearly describe the scope of the present disclosure and such that one of ordinary skill in the art may easily work the present disclosure. The disclosed embodiments may be implemented in various forms.

Expressions such as "includes" or "may include" that may be used in various embodiments of the present disclosure indicate the existence of a disclosed function, operation, or component, etc., and do not limit one or more additional functions, operations, or components, etc. Furthermore, in various embodiments of the present disclosure, it should be understood that terms such as "include" or "have" are intended to specify the presence of a feature, number, step, operation, component, part, or combination thereof described in the specification, but do not preclude the possibility of the presence or addition of one or more other features, numbers, steps, operations, components, parts, or combinations thereof.

When it is said that a component is "connected, coupled" to another component, it should be understood that the component may be directly connected or coupled to the other component, but that there may also be new components between the component and the other component. On the other hand, when it is said that a component is "directly connected" or "directly coupled" to another component, it should be understood that no new component exists between said component and said other component.

The terms first, second, etc. used in this specification may be used to describe various components, but the components should not be limited by the terms. Terms are used solely to distinguish one component from another.

The present disclosure relates to a unit module of a fuel cell humidifier and a fuel cell humidifier including the same, and more particularly, to a unit module of a fuel cell humidifier and a fuel cell humidifier including the same, wherein a unit module including a plurality of cartridges is manufactured and a fuel cell humidifier is manufactured using the unit module, such that the fuel cell humidifier may be manufactured in various forms. Hereinafter, preferred embodiments of the present disclosure will be described in detail with reference to the attached drawings.

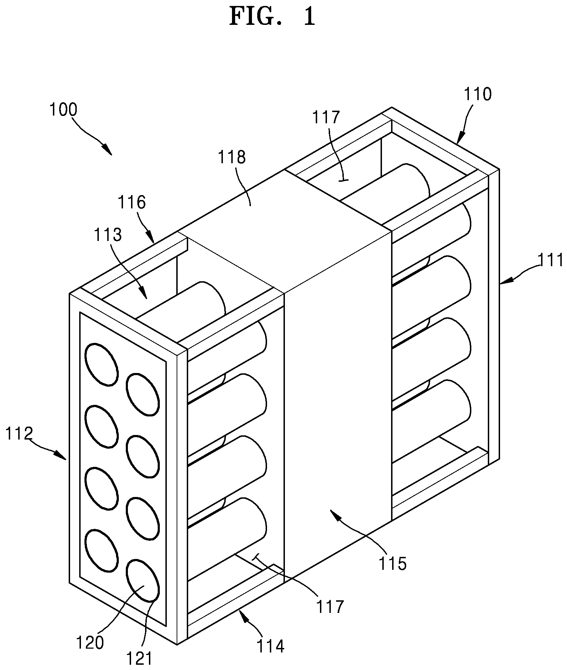

Referring to FIG. 1, a unit module 100 of a fuel cell humidifier according to an embodiment of the present disclosure includes a module housing 110 and a cartridge 120.

The module housing 110 is formed in a hexahedral shape and has a first opening 117 on an upper surface 113, lower surface 114, front surface 115, and rear surface 116. The upper surface 113 of the module housing 110 may be the upper surface with reference to FIG. 1, and the lower surface 114 may be the surface facing the upper surface 113.

The front surface 115 of the module housing 110 may be a surface of a front portion with respect to FIG. 1, and the rear surface 116 may be a surface facing the front surface 115. One side surface 111 of the module housing 110 may be a surface provided on one side of the upper surface 113 and the front surface 115 with reference to FIG. 1, and the other side surface 112 of the module housing 110 may be a surface provided on the other side of the upper surface 113 and the front surface 115 with reference to FIG. 1.

According to an embodiment of the present disclosure, the module housing 110 may include the first opening 117 that is open to the outside on the upper surface 113, the lower surface 114, the front surface 115, and the rear surface 116.

The first opening 117 may be a portion that is open to the outside such that air may move therethrough, and outside air may move into the inside of the module housing 110 through the first opening 117.

According to an embodiment of the present disclosure, the one side surface 111 and the other side surface 112 of the module housing 110 may be closed off from the outside. The one side surface 111 and the other side surface 112 of the module housing 110 may be fixed to one side and the other side of the cartridge 120, and the one side surface 111 and the other side surface 112 of the module housing 110 may be closed off to prevent air from moving.

As the one side surface 111 and the other side surface 112 of the module housing 110 are closed off, outside air cannot move into the module housing 110 through the one side surface 111 and the other side surface 112 of the module housing 110. However, the cartridge 120 may be provided with a hole that is connected to a humidification membrane while communicating with the outside, and outside air may move into the inside of the cartridge 120 through the hole.

Referring to FIG. 1, the cartridge 120 is mounted on the module housing 110 and has a humidification membrane provided inside. The cartridge 120 may be formed in a columnar shape and may be fixed to the one side surface 111 and the other side surface 112 of the module housing 110.

The cartridge 120 may be formed in a columnar shape and extend from the one side surface 111 to the other side surface 112 of the module housing 110, and a humidification membrane may be provided inside the cartridge 120.

The cartridge 120 according to an embodiment of the present disclosure may be formed as a columnar structure having a cross-section of various shapes. In FIG. 1, the cartridge 120 is illustrated as having a circular cross-section, but is not limited thereto. The cross-section of the cartridge 120 may be formed in a circle, an oval, a polygon, or a square with a semicircle attached to each of the two opposite ends of the square.

According to an embodiment of the present disclosure, one or more cartridges 120 may be mounted in the module housing 110, and a plurality of cartridges 120 may be mounted in the module housing 110.

According to an embodiment of the present disclosure, the cartridge 120 may include an inner case, a humidification membrane, and a fixing portion. The inner case may be a case having a space thereinside, and the humidification membrane may be arranged inside the inner case.

The humidification membrane may be a humidification membrane that exchanges moisture between exhaust gas and dry air, and one or more humidification membranes may be provided inside the inner case. According to an embodiment of the present disclosure, the humidification membrane may be formed of a hollow fiber membrane. However, the present disclosure is not limited thereto, and the humidification membrane may be formed of various types of humidification membranes as long as the same may exchange moisture between exhaust gas and dry air.

The fixing portion fixes the humidification membrane to the inner case on one side of the inner case, and the fixing portion may be formed of a potting layer. The fixing portion may be formed on one side of a plurality of the humidification membranes, and one side of the plurality of the humidification membranes may be fixed to one side of the inner case through the fixing portion.

Additionally, the fixing portion may fix a plurality of the humidification membranes to the inner case on the other side of the inner case. The fixing portion may also be formed on the other side of the plurality of humidification membranes, and the other side of the plurality of humidification membranes may be fixed to the other side of the inner case through the fixing portion.

The fixing portion may isolate the internal space of the inner case, and by providing the fixing portion on one side and the other side of the inner case, dry air may move only through the inside of the humidification membrane or the hollow space of the humidification membrane.

According to an embodiment of the present disclosure, high-temperature and humid exhaust gas discharged from a fuel cell stack may be introduced into the module housing 110 through any one or more of the first openings 117 provided in the upper surface 113, the lower surface 114, the front surface 115, and the rear surface 116 of the module housing 110.

According to an embodiment of the present disclosure, dry air may be introduced into the humidification membrane of the cartridge 120 through the one side surface 111 or the other side surface 112 of the module housing 110.

As described above, as the one side surface 111 and the other side surface 112 of the module housing 110 are closed off from the outside, dry air that moves to the one side surface 111 or the other side surface 112 of the module housing 110 moves to the humidification membrane provided inside the cartridge 120.

The exhaust gas introduced into the module housing 110 through any one or more of the first openings 117 provided in the upper surface 113, the lower surface 114, the front surface 115, and the rear surface 116 of the module housing 110 exchanges moisture with the dry air passing through the humidification membrane of the cartridge 120, thereby supplying moisture to the dry air.

The exhaust gas that has supplied moisture to the dry air through the humidification membrane may be discharged to the outside of the module housing 110 through any one or more of the first openings 117 provided in the upper surface 113, the lower surface 114, the front surface 115, and the rear surface 116 of the module housing 110.

In addition, dry air supplied with moisture from the exhaust gas passes through the humidification membrane of the cartridge 120 provided on the one side surface 111 or the other side surface 112 of the module housing 110 and is supplied to the stack.

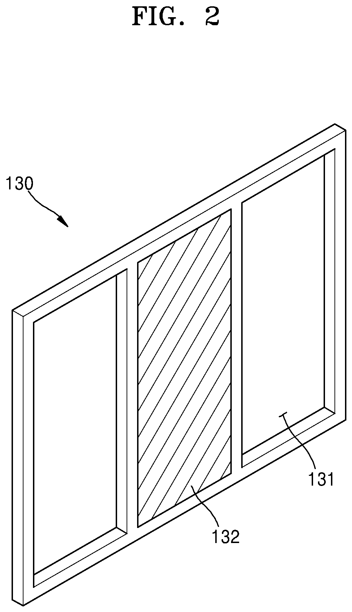

Referring to FIG. 2, the unit module 100 of the fuel cell humidifier according to an embodiment of the present disclosure may further include a connection gasket 130. The connection gasket 130 is assemblably coupled to any one or more of the upper surface 113, the lower surface 114, the front surface 115, and the rear surface 116 of the module housing 110.

Referring to FIG. 2, the connection gasket 130 is formed in a plate shape, and the connection gasket 130 may be provided with a second opening 131 that is open to the outside. The second opening 131 may be a portion that is open to the outside such that air may move therethrough, and the second opening 131 may be formed inside the connection gasket 130 formed in a plate shape. Air may pass through the connection gasket 130 through the second opening 131.

According to an embodiment of the present disclosure, when the connection gasket 130 is coupled to any one or more of the upper surface 113, the lower surface 114, the front surface 115, and the rear surface 116 of the module housing 110, the first opening 117 and the second opening 131 may communicate with each other.

The connection gasket 130 is for connecting two unit modules 100 of a fuel cell humidifier. One unit module 100 may be connected to one side of the connection gasket 130, and another unit module 100 may be connected to the other side of the connection gasket 130.

When the connection gasket 130 is coupled to one unit module 100, the first opening 117 provided on any one of the upper surface 113, the lower surface 114, the front surface 115, and the rear surface 116 of the module housing 110 provided on one unit module 100 may communicate with the second opening 131 of the connection gasket 130.

In addition, when the connection gasket 130 is coupled to another unit module 100, the first opening 117 provided in any one of the upper surface 113, the lower surface 114, the front surface 115, and the rear surface 116 of the module housing 110 provided on the other unit module 100 and the second opening 131 of the connection gasket 130 may communicate with each other.

When two unit modules 100 are connected to each other through the connection gasket 130 in this manner, air may move through the first opening 117 of one unit module 100, the second opening 131 of the connection gasket 130, and the first opening 117 of the other unit module 100.

According to an embodiment of the present disclosure, the module housing 110 may be provided with a first support portion 118 which is disposed in the middle of the module housing 110 and has a through hole in which the cartridge 120 is mounted.

Referring to FIG. 1, the first support portion 118 may be a portion that partitions the interior of the module housing 110, and the first support portion 118 may divide the interior of the module housing 110 into two spaces.

The first support portion 118 may be provided with a through hole through which the cartridge 120 may pass, and the cartridge 120 may extend from the one side surface 111 of the module housing 110 through the through hole of the first support portion 118 to the other side surface 112 of the module housing 110.

According to an embodiment of the present disclosure, the first opening 117 provided in the upper surface 113, the lower surface 114, the front surface 115, and the rear surface 116 of the module housing 110 may be divided based on the first support portion 118.

Specifically, the first opening 117 provided in the upper surface 113, the lower surface 114, the front surface 115, and the rear surface 116 of the module housing 110 may be divided into two spaces through the first support portion 118.

By dividing the internal space of the module housing 110 and the first openings 117 into two spaces through the first support portion 118, the internal space of the module housing 110 and the first opening 117 may be divided into a point where exhaust gas flows in and a point where exhaust gas flows out.

One of the internal space of the module housing 110 divided through the first support portion 118 and the first opening 117 may be used as a space and passage through which exhaust gas flows in, and the other of the internal space of the module housing 110 divided through the first support portion 118 and the first opening 117 may be used as a space and passage through which exhaust gas flows out.

Referring to FIG. 2, according to an embodiment of the present disclosure, the connection gasket 130 that is assemblably coupled to any one or more of the upper surface 113, the lower surface 114, the front surface 115, and the rear surface 116 of the module housing 110 may include the second opening 131 and a second support portion 132.

The second opening 131 may be a portion that is open to the outside, and the second support portion 132 may be a portion that is closed off from the outside. The second opening 131 may be divided by the second support portion 132, and the second opening 131 may be divided into two by the second support portion 132.

The connection gasket 130 including the second opening 131 and the second support portion 132 may be coupled to the module housing 110 provided with the first support portion 118, and the connection gasket 130 may be formed in a shape corresponding to the shape of the module housing 110.

When the connection gasket 130 including the second opening 131 and the second support portion 132 is coupled to the module housing 110 having the first support portion 118, the first opening 117 provided in any one of the upper surface 113, the lower surface 114, the front surface 115, and the rear surface 116 of the module housing 110 and the second opening 131 of the connection gasket 130 may communicate with each other.

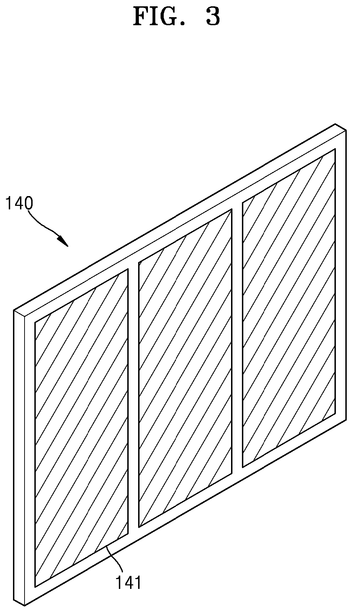

Referring to FIG. 3, the unit module 100 of the fuel cell humidifier according to an embodiment of the present disclosure may further include a housing gasket 140. The housing gasket 140 is assemblably coupled to any one or more of the upper surface 113, the lower surface 114, the front surface 115, and the rear surface 116 of the module housing 110.

Referring to FIG. 3, the housing gasket 140 is formed in a plate shape, and the housing gasket 140 may be closed off from the outside. When the housing gasket 140 is coupled to any one or more of the upper surface 113, the lower surface 114, the front surface 115, and the rear surface 116 of the module housing 110, the upper surface 113, the lower surface 114, the front surface 115, and the rear surface 116 of the module housing 110 may be blocked.

Specifically, among the upper surface 113, the lower surface 114, the front surface 115, and the rear surface 116 of the module housing 110, a portion to which the housing gasket 140 is coupled may be a portion that is blocked to prevent air from moving.

When a plurality of unit modules 100 are connected to each other, the housing gasket 140 may be coupled to a portion arranged at the outermost end among the upper surface 113, the lower surface 114, the front surface 115, and the rear surface 116 of the module housing 110 provided in the plurality of unit modules 100, and the housing gasket 140 may act as an external housing.

Referring to FIG. 3, the housing gasket 140 may be provided with a cut portion 141 formed in a groove shape recessed into the inside of the housing gasket 140. The cut portion 141 is a groove formed in the housing gasket 140 having a plate shape, and may have the same shape as the second opening 131 provided in the connection gasket 130.

According to an embodiment of the present disclosure, when the cut portion 141 of the housing gasket 140 is cut, an opening may be formed in the housing gasket 140. Through this, the housing gasket 140 may be manufactured by changing the same to the connection gasket 130.

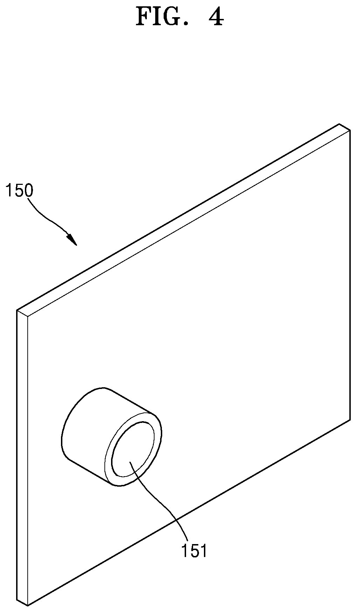

Referring to FIG. 4, the unit module 100 of the fuel cell humidifier according to an embodiment of the present disclosure may further include a first port gasket 150. The first port gasket 150 is assemblably coupled to any one or more of the upper surface 113, the lower surface 114, the front surface 115, and the rear surface 116 of the module housing 110.

The first port gasket 150 may be provided with one first port 151 formed by a hole open to the outside. The first port gasket 150 may be formed in a plate shape, and the first port 151 may be a hole formed in a shape protruding outward from the first port gasket 150.

Other portions of the first port gasket 150 than the position where the first port 151 is provided may be closed off from the outside. When the first port gasket 150 is assembled to any one of the upper surface 113, the lower surface 114, the front surface 115, and the rear surface 116 of the module housing 110, air may move only through the first port 151.

According to an embodiment of the present disclosure, the first port 151 may be provided at the center of the first port gasket 150, and the first port 151 may be provided eccentrically to one side from the center of the first port gasket 150. A position at which the first port 151 is provided in the first port gasket 150 may vary depending on a product of a fuel cell humidifier described later.

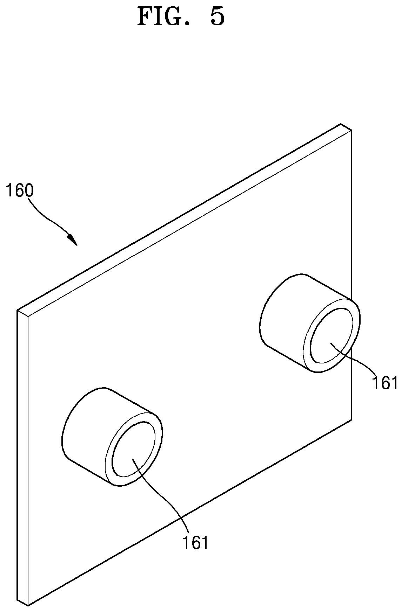

Referring to FIG. 5, the unit module 100 of the fuel cell humidifier according to an embodiment of the present disclosure may further include a second port gasket 160. The second port gasket 160 is assemblably coupled to any one or more of the upper surface 113, the lower surface 114, the front surface 115, and the rear surface 116 of the module housing 110.

the second port gasket 160 may be provided with two or more second ports 161 formed by holes open to the outside. The second port gasket 160 may be formed in a plate shape, and the second port 161 may be a hole formed in a shape protruding outward from the second port gasket 160. The second port gasket 160 may be provided with two or more second ports 161, but only two second ports 161 may preferably be provided in the second port gasket 160.

In the second port gasket 160, other parts other than the positions where the second ports 161 are provided may be closed off from the outside. When the second port gasket 160 is assembled to any one of the upper surface 113, the lower surface 114, the front surface 115, and the rear surface 116 of the module housing 110, air may move only through the second ports 161.

According to an embodiment of the present disclosure, the second ports 161 may be provided eccentrically to one side from the center of the second port gasket 160, and the second ports 161 may be provided at various positions of the second port gasket 160. The position at which the second ports 161 are provided in the second port gasket 160 may vary depending on a product of a fuel cell humidifier.

Referring to FIG. 1, when the cartridge 120 having a columnar shape is fixed to the one side surface 111 and the other side surface 112 of the module housing 110, a sealing member 121 may be provided between the cartridge 120 and the module housing 110.

The sealing member 121 is intended to block air from moving through the one side surface 111 and the other side surface 112 of the module housing 110. Specifically, the sealing member 121 is provided to block air from moving into the space between the cartridge 120 and the module housing 110.

According to an embodiment of the present disclosure, a sealing member may also be provided on the connection gasket 130, the housing gasket 140, the first port gasket 150, and the second port gasket 160 assembled to any one of the upper surface 113, the lower surface 114, the front surface 115, and the rear surface 116 of the module housing 110.

Specifically, a sealing member may be provided between the module housing 110 and the connection gasket 130, and a sealing member may be provided between the module housing 110 and the housing gasket 140. Additionally, a sealing member may be provided between the module housing 110 and the first port gasket 150, and a sealing member may be provided between the module housing 110 and the second port gasket 160.

According to an embodiment of the present disclosure, the connection gasket 130, the housing gasket 140, the first port gasket 150, and the second port gasket 160 assembled to any one of the upper surface 113, the lower surface 114, the front surface 115, and the rear surface 116 of the module housing 110 may be assembled to the module housing 110 by a bolt assembly, a snap-fit assembly, a socket assembly, or the like.

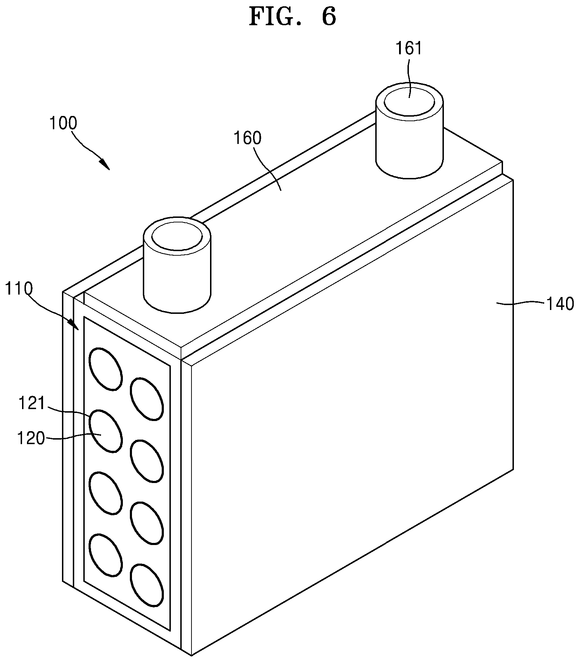

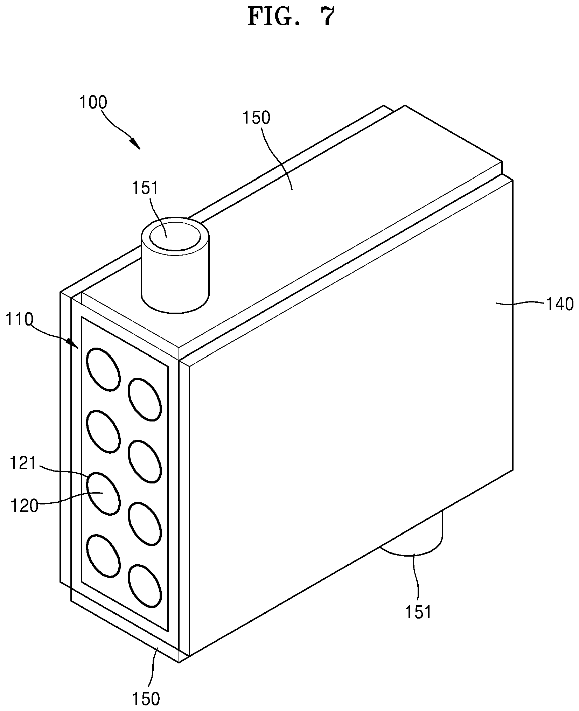

Referring to FIGS. 6 and 7, the unit module 100 of a fuel cell humidifier according to an embodiment of the present disclosure may be manufactured as a fuel cell humidifier.

According to an embodiment of the present disclosure, as shown in FIG. 6, by coupling the second port gasket 160 to one of the upper surface 113, the lower surface 114, the front surface 115, and the rear surface 116 of the module housing 110, and coupling the housing gasket 140 to a surface to which the second port gasket 160 is not coupled, among the upper surface 113, the lower surface 114, the front surface 115, and the rear surface 116 of the module housing 110, a fuel cell humidifier may be manufactured using one unit module 100.

According to another embodiment of the present disclosure, as shown in FIG. 7, when the first port gasket 150 is coupled to two surfaces among the upper surface 113, the lower surface 114, the front surface 115, and the rear surface 116 of the module housing 110, and the housing gasket 140 is coupled to a surface to which the first port gasket 150 is not coupled, among the upper surface 113, the lower surface 114, the front surface 115, and the rear surface 116 of the module housing 110, a fuel cell humidifier may be manufactured using one unit module 100.

A fuel cell humidifier 10 including a unit module according to an embodiment of the present disclosure may be manufactured using a plurality of the unit modules 100. The fuel cell humidifier 10 including a unit module according to an embodiment of the present disclosure may include the unit module 100, the connection gasket 130, and the housing gasket 140.

The unit module 100 may be formed in a hexahedral shape and include the module housing 110 having the first opening 117 on the upper surface 113, the lower surface 114, the front surface 115, and the rear surface 116, and the cartridge 120 mounted on the module housing 110 and having a humidification membrane provided therein. The unit module 100 included in the fuel cell humidifier 10 including the unit module according to the embodiment of the present disclosure is the same as that described above, and thus a detailed description thereof is omitted.

The connection gasket 130 may be assemblably coupled to any one or more of the upper surface 113, the lower surface 114, the front surface 115, and the rear surface 116 of the module housing 110, and may be provided with the second opening 131 that is open to the outside. The connection gasket 130 included in the fuel cell humidifier 10 including a unit module according to the embodiment of the present disclosure is the same as that described above, and thus, a detailed description thereof is omitted.

The housing gasket 140 is assemblably coupled to any one or more of the upper surface 113, the lower surface 114, the front surface 115, and the rear surface 116 of the module housing 110 and is closed off from the outside. The housing gasket 140 included in the fuel cell humidifier 10 including the unit module according to the embodiment of the present disclosure is the same as that described above, and thus, a detailed description thereof is omitted.

The fuel cell humidifier 10 including a unit module according to an embodiment of the present disclosure may further include the first port gasket 150. The first port gasket 150 may be assemblably coupled to any one or more of the upper surface 113, the lower surface 114, the front surface 115, and the rear surface 116 of the module housing 110, and have one first port formed by a hole open to the outside. The first port gasket 150 included in the fuel cell humidifier 10 including a unit module according to the embodiment of the present disclosure is the same as that described above, and thus, a detailed description thereof is omitted.

The fuel cell humidifier 10 including a unit module according to an embodiment of the present disclosure may further include the second port gasket 160. The second port gasket 160 may be assemblably coupled to any one or more of the upper surface 113, the lower surface 114, the front surface 115, and the rear surface 116 of the module housing 110, and have two or more second ports formed by holes open to the outside. The second port gasket 160 included in the fuel cell humidifier 10 including a unit module according to the embodiment of the present disclosure is the same as that described above, and thus a detailed description thereof is omitted.

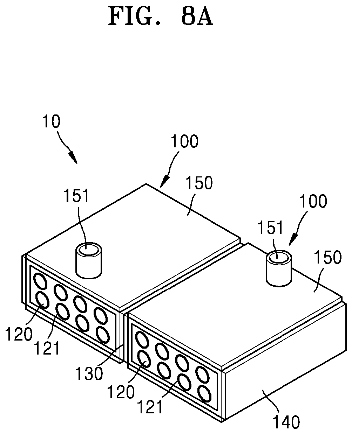

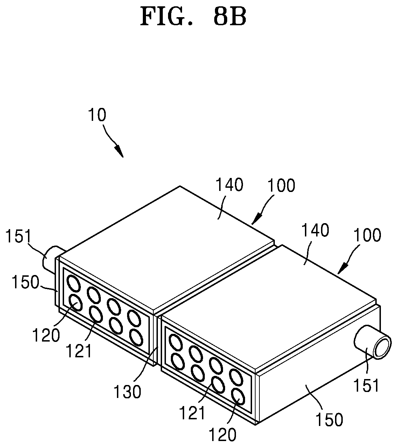

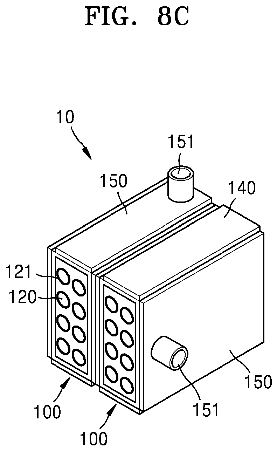

The fuel cell humidifier 10 according to an embodiment of the present disclosure may include a plurality of the unit modules 100, and the unit modules 100 may be connected to each other. Referring to FIGS. 8A, 8B, and 8C, the connection gasket 130 may be provided between one unit module 100 and another unit module 100 and connect one unit module 100 to the other unit module 100.

According to an embodiment of the present disclosure, when manufacturing the fuel cell humidifier 10 through a plurality of unit modules 100, either the housing gasket 140 or the first port gasket 150 may be coupled to a portion arranged at the outermost end among the upper surface 113, the lower surface 114, the front surface 115, and the rear surface 116 of the module housing 110 provided in the unit modules 100.

In addition, when manufacturing the fuel cell humidifier 10 through the plurality of unit modules 100, the second port gasket 160 may be coupled to a portion arranged at the outermost end among the upper surface 113, the lower surface 114, the front surface 115, and the rear surface 116 of the module housing 110 provided in the unit modules 100.

When manufacturing the fuel cell humidifier 10 by using the plurality of unit modules 100, the connection gasket 130 may be coupled to portions at which the plurality of unit modules 100 are connected to each other, and the housing gasket 140, the first port gasket 150, or the second port gasket 160 may be coupled to a portion arranged at the outermost end the plurality of unit modules 100 are not connected to each other.

Referring to FIGS. 8A, 8B, and 8C, the fuel cell humidifier 10 according to an embodiment of the present disclosure may be manufactured using two of the unit modules 100. The fuel cell humidifier 10 according to an embodiment of the present disclosure may be manufactured by arranging two of the unit modules 100 in series or parallel.

Here, the connection gasket 130 may be coupled between the two unit modules 100, and the housing gasket 140, the first port gasket 150, or the second port gasket 160 may be coupled to a portion arranged at the outermost end where the two unit modules 100 are not connected to each other.

According to an embodiment of the present disclosure, when manufacturing the fuel cell humidifier 10 using two of the unit modules 100, two of the first port gaskets 150 may be used. The two first port gaskets 150 may be coupled to the unit module 100 so that the first ports 151 are positioned on the same side.

In addition, the two first port gaskets 150 may be coupled to the unit module 100 so that the two first ports 151 are positioned opposite to each other, and the two first port gaskets 150 may be coupled to the unit module 100 so that the two first ports 151 are positioned perpendicular to each other.

In this way, by changing the joining position of the first port gasket 150 coupled to the unit module 100, the port position of the fuel cell humidifier 10 through which exhaust gas flows in and out may be easily changed. In addition, the position of the first port 151 may be freely changed by adjusting the eccentric position of the first port 151 provided in the first port gasket 150.

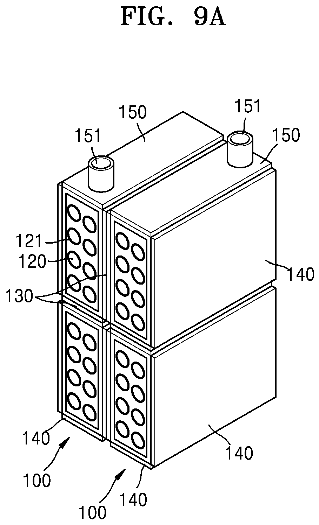

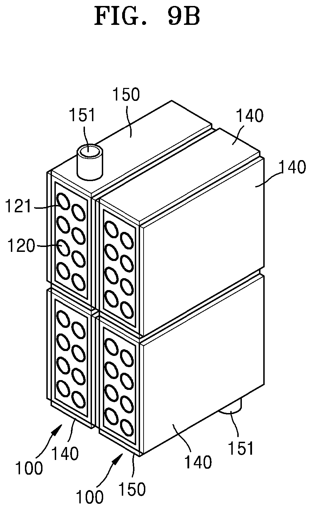

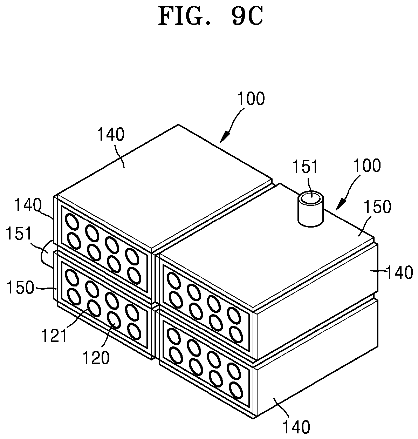

Referring to FIGS. 9A, 9B, and 9C, the fuel cell humidifier 10 according to an embodiment of the present disclosure may be manufactured using four of the unit modules 100. The fuel cell humidifier 10 according to an embodiment of the present disclosure may have four of the unit modules 100 arranged in series or parallel, or may be arranged in a combination of series and parallel.

Here, the connection gasket 130 may be coupled between the four unit modules 100, and the housing gasket 140, the first port gasket 150, or the second port gasket 160 may be coupled to a portion arranged at the outermost end where the four unit modules 100 are not connected to each other.

According to an embodiment of the present disclosure, when manufacturing the fuel cell humidifier 10 using four of the unit modules 100, two of the first port gaskets 150 may be used. The two first port gaskets 150 may be coupled to the unit module 100 so that the first ports 151 are positioned on the same side.

In addition, the two first port gaskets 150 may be coupled to the unit module 100 so that the two first ports 151 are positioned opposite to each other, and the two first port gaskets 150 may be coupled to the unit module 100 so that the two first ports 151 are positioned perpendicular to each other.

In this way, by changing the joining position of the first port gasket 150 coupled to the unit module 100, the port position of the fuel cell humidifier 10 through which exhaust gas flows in and out may be easily changed. In addition, the position of the first port 151 may be freely changed by adjusting the eccentric position of the first port 151 provided in the first port gasket 150.

In the above description, it has been described that the fuel cell humidifier 10 is manufactured using two or four of the unit modules 100, but it is not limited thereto. The fuel cell humidifier 10 according to an embodiment of the present disclosure may be manufactured using a number of unit modules 100 other than two or four.

In this way, according to the fuel cell humidifier 10 of an embodiment of the present disclosure, the size of the fuel cell humidifier 10 may be adjusted by adjusting the number of unit modules 100 without manufacturing a separate housing member.

In addition, the fuel cell humidifier 10 according to an embodiment of the present disclosure may control the amount of humidified air supplied to fuel cells by controlling the number of unit modules 100 without manufacturing a separate housing member.

The unit module of a fuel cell humidifier according to the embodiment of the present disclosure described above and the fuel cell humidifier including the same have the following effects.

According to the unit module of a fuel cell humidifier according to an embodiment of the present disclosure and the fuel cell humidifier including the same, a unit module including a plurality of cartridges may be manufactured and a fuel cell humidifier may be manufactured using the unit module, such that the fuel cell humidifier may be manufactured in various forms.

In addition, according to the unit module of a fuel cell humidifier according to an embodiment of the present disclosure and the fuel cell humidifier including the same, the degree of freedom in manufacturing a fuel cell humidifier may be improved by assemblably coupling, to a unit module, a connection gasket, a housing gasket, and a first port gasket and a second port gasket each having a port.

In addition, according to the unit module of a fuel cell humidifier according to an embodiment of the present disclosure and the fuel cell humidifier including the same, as a first port gasket and a second port gasket each having a port are assembled to a unit module while changing the positions of the first port gasket and the second port gasket, the positions of the ports may be freely selected.

In addition, according to the unit module of a fuel cell humidifier according to an embodiment of the present disclosure and the fuel cell humidifier including the same, the unit module of the fuel cell humidifier may be replaced during use, and all or some of the cartridges may be replaced and used by replacing the unit module of the fuel cell humidifier during use.

Although the present disclosure has been described with reference to an embodiment shown in the drawings, this is merely an example, and those skilled in the art will understand that various modifications and variations of embodiments may be made therefrom. Therefore, the true technical protection scope of the present disclosure should be determined by the technical idea of the attached patent claims.

## Claims

1. A unit module used in a fuel cell humidifier, the unit module comprising:
a module housing formed in a hexahedral shape and having first openings in an upper surface, lower surface, front surface, and rear surface; and
a cartridge mounted on the module housing and having a humidification membrane therein,
wherein the cartridge is formed in a columnar shape and is fixed to one side surface and the other side surface of the module housing, and
one or more of the cartridge are mounted in the module housing.

2. The unit module of claim 1,
further comprising a connection gasket that is assemblably coupled to any one or more of the upper surface, the lower surface, the front surface, and the rear surface of the module housing, and that includes a second opening open to the outside.

3. The unit module of claim 2, wherein,
when the connection gasket is coupled to any one or more of the upper surface, the lower surface, the front surface, and the rear surface of the module housing, the first openings and the second opening communicate with each other.

4. The unit module of claim 1, wherein
the module housing is provided with a first support portion disposed in a middle portion of the module housing, and has a through hole in which the cartridge is mounted, and
the first openings provided in the upper surface, the lower surface, the front surface, and the rear surface of the module housing are divided based on the first support portion.

5. The unit module of claim 4,
further comprising a connection gasket that is assemblably coupled to any one or more of the upper surface, the lower surface, the front surface, and the rear surface of the module housing, and that includes a second opening open to the outside and a second support portion closed off from the outside,
wherein the second opening of the connection gasket is divided based on the second support portion, and
when the connection gasket is coupled to any one or more of the upper surface, the lower surface, the front surface, and the rear surface of the module housing, the first openings and the second opening communicate with each other.

6. The unit module of claim 1, further comprising
a housing gasket that is assemblably coupled to any one or more of the upper surface, the lower surface, the front surface, and the rear surface of the module housing and is closed off from the outside, and
when the housing gasket is coupled to any one or more of the upper surface, the lower surface, the front surface, and the rear surface of the module housing, the upper surface, lower surface, the front surface, and the rear surface of the module housing are blocked.

7. The unit module of claim 6, wherein
the housing gasket has a cut portion formed in a groove shape recessed toward the inside of the housing gasket.

8. The unit module of claim 1,
further comprising a first port gasket that is assemblably coupled to any one or more of the upper surface, the lower surface, the front surface, and the rear surface of the module housing, and
includes a first port formed by a hole open to the outside.

9. The unit module of claim 1,
further comprising a second port gasket that is assemblably coupled to any one or more of the upper surface, the lower surface, the front surface, and the rear surface of the module housing, and
includes two or more second ports formed by as holes open to the outside.

10. The unit module of claim 1, wherein,
when the cartridge having a columnar shape is fixed to the one side surface and the other side surface of the module housing,
a sealing member is provided between the cartridge and the module housing.

11. A fuel cell humidifier comprising:
a unit module comprising a module housing formed in a hexahedral shape and having first openings in an upper surface, lower surface, front surface, and rear surface, and a cartridge mounted on the module housing and having a humidification membrane therein;
a connection gasket that is assemblably coupled to any one or more of the upper surface, the lower surface, the front surface, and the rear surface of the module housing and includes a second opening that is open to the outside; and
a housing gasket that is assemblably coupled to any one or more of the upper surface, the lower surface, the front surface, and the rear surface of the module housing and is closed off from the outside,
wherein the unit module is provided in plurality and the plurality of unit modules are connected to each other.

12. The fuel cell humidifier of claim 11, further comprising
a first port gasket that is assemblably coupled to any one or more of the upper surface, the lower surface, the front surface, and the rear surface of the module housing, and includes a first port formed by a hole that is open to the outside.

13. The fuel cell humidifier of claim 12, wherein
the connection gasket is provided between one unit module and another unit module and connects the one unit module to the other unit module.

14. The fuel cell humidifier of claim 13, wherein
either the housing gasket or the first port gasket is coupled to a portion arranged at an outermost end among the upper surface, the lower surface, the front surface, and the rear surface of the module housing provided in the unit module.
